# EUROPÄISCHE PATENTSCHRIFT

(11) **EP 0 838 892 B1**
(45) Veröffentlichungstag und Bekanntmachung des Hinweises auf die Patenterteilung: **27.03.2002**
(21) Anmeldenummer: 97118395.9
(22) Anmeldetag: 23.10.1997
(51) Int. Cl.: H02M 1/10

(54) **Mehrbereichs-Spannungsnetzteil**
Multiple voltage range power supply
Alimentation à plusieurs échelles de tension

(30) Priorität: 25.10.1996 DE 19644435
(43) Veröffentlichungstag der Anmeldung: 29.04.1998
(73) Patentinhaber: Moeller GmbH, 53115 Bonn (DE)
(72) Erfinder: Kühn, Torsten, 53604 Bad Honnef (DE); Arnold, Ralph, 53113 Bonn (DE)

(56) Entgegenhaltungen:
- EP-A- 0 417 800
- CH-A- 396 194

## Beschreibung

Die vorliegende Erfindung betrifft ein Mehrbereichs-Spannungsnetzteil mit einer automatischen Bereichsumschaltung für verschiedene Versorgungsspannungen, das mindestens zwei Eingangsanschlüsse für eine Versorgungsspannung, zwei Ausgangsanschlüsse für eine Ausgangsspannung sowie eine Gleichrichterschaltung aufweist.

Aus dem Stand der Technik sind bereits verschiedenartige Gleichspannungsnetzteile zum Anschluß an unterschiedliche Versorgungsspannungen bekannt.
Die DE 44 08 009 A1 beschreibt zum Beispiel ein Gleichspannungsnetzgerät bestehend aus einer Eingangsstufe zum Filtern und Gleichrichten der Eingangsspannung, einer Wandlerstufe zum DC/DC-Wandeln der Eingangsspannung und mindestens einer Ausgangsstufe zur Glättung und Erzeugung der gewünschten Ausgangsspannung, wobei zwischen der Wandlerstufe und der Ausgangsstufe ein Energiespeicher angeordnet ist. Dabei stellt der Energiespeicher eine im wesentlichen konstante Zwischenspannung für die Ausgangsstufe zur Verfügung.
Ferner sind in der EP 0 448 908 A1 ein Verfahren zur Erzeugung einer stabilen Gleichspannung und eine stabile Gleichspannungsquelle beschrieben. Diese Gleichspannungsquelle besteht im wesentlichen aus einer Induktivität, zu der ein steuerbares Schaltelement in Serie geschaltet worden ist. Durch das steuerbare Schaltelement und eine Stromdiskriminatorschaltung wird hier ein nahezu konstanter Gleichspannungsmittelwert erzeugt.
Beide Ausführungsformen haben den Nachteil, daß sie relativ aufwendig und kostenintensiv realisiert sind.

Der vorliegenden Erfindung liegt die Aufgabe zugrunde, ein Mehrbereichsnetzteil anzugeben, das bei einfachstem Aufbau einerseits einen weiten Eingangsbereich und andererseits unterschiedliche Spannungsarten, wie Wechsel- oder Gleichspannung, zuläßt und dabei eine stabile Ausgangsspannung zur Verfügung stellt.

Die Aufgabe wird dadurch gelöst, daß zwischen den Eingangsanschlüssen des Netzteils eine Stromteilerschaltung, bestehend aus einer Parallelschaltung eines kapazitiven Widerstandes und eines temperaturabhängigen Widerstandes mit positivem Temperaturkoeffizienten (PTC), geschaltet ist und in Serie zu der Stromteilerschaltung die Gleichrichterschaltung angeordnet ist. Mit dem erfindungsgemäßen Mehrbereichsnetzteil wird ein mit einfachen und preiswerten Mitteln realisiertes Netzteil, mit einem Eingangs-Spannungsbereich von mindestens 20V-230V, angegeben. Auch thermische Probleme treten bei diesem einfachen Aufbau nicht mehr auf.
Mit Vorteil ist es möglich, den gesamten Eingangsspannungsbereich über lediglich zwei Eingangsanschlüsse dem Mehrbereichs-Spannungsnetzteil zuzuführen. Dabei ist im unteren, für Gleich- und Wechselspannung vorgesehenen Spannungsbereich von zirka 20V-60V nur der temperaturabhängige Widerstand wirksam, da in diesem Bereich der kapazitive Widerstand, der insbesondere in Form eines Kondensators ausgebildet ist, als unendlicher großer Widerstand wirkt. Im oberen, lediglich für Wechselspannung vorgesehenen Spannungsbereich, von zirka 110V-230V fließt zu Anfang der Versorgungsstrom durch beide Teile des Stromteilers, bis sich innerhalb kürzester Zeit der PTC erwärmt und seinen Widerstand derart erhöht, daß praktisch nur noch der Kondensator wirksam ist. Durch diese erfindungsgemäße Ausbildung wird der Spannungsteiler in den verschiedenen Spannungsbereichen jeweils automatisch entsprechend richtig ausgelegt. Weitere Vorteile der Erfindung sind in der nachfolgenden Figurenbeschreibung und in den Unteransprüchen vorhanden.

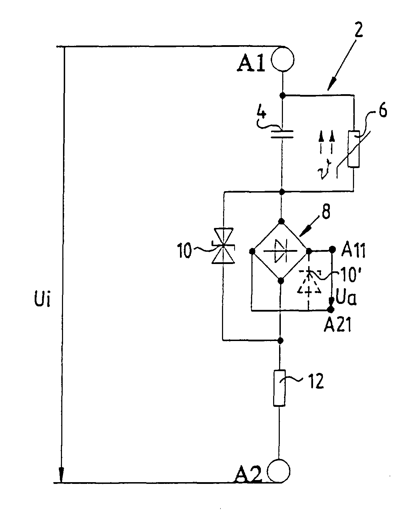

In der einzigen Zeichnung ist das erfindungsgemäße Mehrbereichs-Spannungsnetzteil in einer möglichen Ausführungsform dargestellt. Das erfindungsgemäße Netzteil weist vorzugsweise lediglich zwei Eingangsanschlüsse (A1, A2) auf, über die das Netzteil in einem weiten Eingangsspannungsbereich versorgt werden kann. An die Eingangsanschlüsse (A1, A2) ist eine Versorgungsspannung (Uᵢ), insbesondere im Bereich von 20V-230V, anschließbar. Die Bereichsumschaltung für die unterschiedlichen Versorgungsspannungen (Uᵢ) erfolgt erfindungsgemäß automatisch. Dabei ist der gesamte Spannungsbereich bevorzugt in einen unteren Spannungsbereich, geeignet für den Anschluß des Netzteils sowohl an eine Gleichspannungsversorgung als auch an eine Wechselspannungsversorgung, und in einen oberen Spannungsbereich, geeignet für den Anschluß an Wechselspannung, vorgesehen. Mit Vorteil wird das erfindungsgemäße Netzteil für einen Versorgungsbereich von zirka 20V-60V Gleich- oder Wechselspannung, sowie einen Versorgungsbereich für Wechselspannung, der sich zirka von 110V-230V erstreckt, ausgelegt.
Zwischen den Eingangsanschlüssen (A1, A2) ist eine Stromteilerschaltung 2 angeordnet. Die Stromteilerschaltung 2 besteht erfindungsgemäß aus der Parallelschaltung eines kapazitiven Widerstandes 4 und eines temperaturabhängigen Widerstandes 6 mit positivem Temperaturkoeffizienten. In Serie zu der Stromteilerschaltung 2 ist eine Gleichrichterschaltung 8, die insbesondere als Vollweg-Gleichrichter (Graetz-Schaltung) ausgebildet ist, angeordnet. Eingangsseitig ist die Gleichrichterschaltung 8 insbesondere mit einer Supressor-Diode 10 oder dergleichen, die lediglich der Spannungsstabilisierung dient, überbrückt. Ferner ist es denkbar, anstelle der eingangsseitig angeordneten Supressor-Diode 10 ausgangsseitig eine Z-Diode 10'oder dergleichen anzuordnen. Im Anschluß an die Serienschaltung von Stromteilerschaltung 2 und Gleichrichterschaltung 8 mit parallelgeschalteter Z-Diode 10' beziehungsweise Supressordiode 10 ist vorzugsweise noch ein ohmscher Widerstand 12 geschaltet.

Der Widerstand 12 hat lediglich strombegrenzende Wirkung. Ferner weist das Netzteil ausgangsseitig der Gleichrichterschaltung 8 zwei Ausgangsanschlüsse A11, A21 zur Abnahme der jeweils gewünschten, stabilen Ausgangsspannung Uₐ auf. Zur Glättung der Ausgangsspannung Uₐ ist ferner vorgesehen das Netzteil ausgangsseitig mit einem Siebglied zu beschalten.

## Patentansprüche

1. Mehrbereichs-Spannungsnetzteil mit einer automatischen Bereichsumschaltung für verschiedene Versorgungsspannungen (Uᵢ), das mindestens zwei Eingangsanschlüsse (A1, A2) für eine Versorgungsspannung (Uᵢ), zwei Ausgangangsanschlüsse (A11, A21) für eine Ausgangsspannung (Uₐ), sowie eine Gleichrichterschaltung (8) aufweist,
**dadurch gekennzeichnet, daß** zwischen den Eingangsanschlüssen (A1, A2) des Netzteils eine Stromteilerschaltung (2) bestehend aus einer Parallelschaltung eines kapazitiven Widerstandes (4) und einem temperaturabhängigen Widerstand (6) mit positivem Temperaturkoeffizienten geschaltet ist und in Serie zu der Stromteilerschaltung (2) die Gleichrichterschaltung (8) angeordnet ist.

2. Mehrbereichs-Spannungsnetzteil nach Anspruch 1,
**dadurch gekennzeichnet, daß** die Gleichrichterschaltung (8) als Vollweggleichrichter ausgebildet ist.

3. Mehrbereichs-Spannungsnetzteil nach Anspruch 1 oder 2,
**dadurch gekennzeichnet, daß** parallel zum Eingang der Gleichrichterschaltung (8) eine Supressor-Diode (10) geschaltet ist.

4. Mehrbereichs-Spannungsnetzteil nach Anspruch 1 oder 2,
**dadurch gekennzeichnet, daß** parallel zum Ausgang der Gleichrichterschaltung eine Z-Diode (10') geschaltet ist.

5. Mehrbereichs-Spannungsnetzteil nach einem oder mehreren der Ansprüche 1-4,
**dadurch gekennzeichnet, daß** in Serie zu der Stromteilerschaltung (2) und der Gleichrichterschaltung (8) ein ohmscher Widerstand (12) geschaltet ist.

6. Mehrbereichs-Spannungsnetzteil nach einem oder mehreren der Ansprüche 1-5,
**dadurch gekennzeichnet, daß** der Ausgang der Gleichrichterschaltung (8) mit einem Siebglied beschaltet ist.

7. Mehrbereichs-Spannungsnetzteil nach einem oder mehreren der Ansprüche 1-6,
**dadurch gekennzeichnet, daß** das Mehrbereichs-Spannungsnetzteil zwei Eingangsanschlüsse (A1, A2) aufweist.

## Claims

1. Multiple voltage range power supply unit with automatic range switching for different supply voltages (Uᵢ), which has at least two input connections (A1, A2) for a supply voltage (Uᵢ), two output connections (A11, A21) for an output voltage (Uₐ), and a rectifier circuit (8),
**characterized in that** a current divider circuit (2) comprising a parallel circuit formed by a capacitive impedance (4) and a temperature-dependent resistance (6) with a positive temperature coefficient is connected between the input connections (A1, A2) of the power supply unit, and the rectifier circuit (8) is arranged in series with the current divider circuit (2).

2. Multiple voltage range power supply unit according to Claim 1,
**characterized in that** the rectifier circuit (8) is in the form of a full-wave rectifier.

3. Multiple voltage range power supply unit according to Claim 1 or 2,
**characterized in that** a suppressor diode (10) is connected in parallel with the input of the rectifier circuit (8).

4. Multiple voltage range power supply unit according to Claim 1 or 2,
**characterized in that** a zener diode (10') is connected in parallel with the output of the rectifier circuit.

5. Multiple voltage range power supply unit according to one or more of Claims 1-4,
**characterized in that** a resistor (12) is connected in series with the current divider circuit (2) and the rectifier circuit (8).

6. Multiple voltage range power supply unit according to one or more of Claim 1-5,
**characterized in that** the output of the rectifier circuit (8) is connected to a filter element.

7. Multiple voltage range power supply unit according to one or more of Claims 1-6,
**characterized in that** the multiple voltage range power supply unit has two input connections (A1, A2).

## Revendications

1. Alimentation secteur à plusieurs gammes avec commutation automatique de gamme pour différentes tensions d'alimentation (Uᵢ), laquelle présente au moins deux bornes d'entrée (A1, A2) pour une tension d'alimentation (Uᵢ), deux bornes de sortie (A11, A21) pour une tension de sortie (Uₐ) ainsi qu'un circuit redresseur (8), **caractérisée en ce qu'**un circuit distributeur de courant (2) composé d'une résistance capacitive (4) et d'une résistance variable en fonction de la température (6) avec coefficient de température positif branchées en parallèle est branché entre les bornes d'entrée (A1, A2) et l'alimentation secteur et le circuit redresseur (8) est branché en série avec le circuit distributeur de courant (2).

2. Alimentation secteur à plusieurs gammes selon la revendication 1, **caractérisée en ce que** le circuit redresseur (8) est réalisé sous la forme d'un redresseur à double alternance.

3. Alimentation secteur à plusieurs gammes selon la revendication 1 ou 2, **caractérisée en ce qu'**une diode de suppression (10) est branchée en parallèle avec l'entrée du circuit redresseur.

4. Alimentation secteur à plusieurs gammes selon la revendication 1 ou 2, **caractérisée en ce qu'**une diode zener (10') est branchée en parallèle avec la sortie du circuit redresseur.

5. Alimentation secteur à plusieurs gammes selon une ou plusieurs des revendications 1 à 4, **caractérisée en ce qu'**une résistance ohmique (12) est branchée en série avec le circuit distributeur de courant (2) et le circuit redresseur (8).

6. Alimentation secteur à plusieurs gammes selon une ou plusieurs des revendications 1 à 5, **caractérisée en ce que** la sortie du circuit redresseur (8) est branchée à un élément de filtrage.

7. Alimentation secteur à plusieurs gammes selon une ou plusieurs des revendications 1 à 6, **caractérisée en ce que** l'alimentation secteur à plusieurs gammes présente deux bornes d'entrée (A1, A2).
